# FASCICULE DE BREVET EUROPEEN

(11) **EP 1 172 259 B1**
(45) Date de publication et mention de la délivrance du brevet: **02.06.2004**
(21) Numéro de dépôt: 01401842.8
(22) Date de dépôt: 10.07.2001
(51) Int. Cl.: B60R 13/00, B60R 13/04, B62D 29/04

(54) **Assemblage de pièces de carrosserie, l'une au moins comportant un film surmoulé**
Karosserieausführung mit mindestens einem mit einem Film umgossenen Teil
Vehicle body assembly, at least one part having an overmoulded film

(30) Priorité: 13.07.2000 FR 0009236
(43) Date de publication de la demande: 16.01.2002
(73) Titulaire: COMPAGNIE PLASTIC OMNIUM, 69007 Lyon (FR)
(72) Inventeur: Gille, Denis, 01100 Bellignat (FR); Delwal, Fabien, Le concorde, 01000 Bourg en Bresse (FR)
(74) Mandataire: Tanty, François

(56) Documents cités:
- EP-A- 0 670 257
- WO-A-94/03337
- US-A- 3 709 770
- US-A- 5 044 688
- US-A- 5 320 151
- US-A- 5 960 527

## Description

La présente invention concerne la fabrication de pièces de carrosserie pour véhicule automobile.

L'invention concerne plus particulièrement un assemblage composé d'au moins deux pièces de carrosserie, dont une pièce comportant sur une face extérieure un film surmoulé.

L'utilisation de pièces de carrosserie comportant un film surmoulé tend à se développer, l'avantage de telles pièces étant d'éviter d'avoir à les peindre.

De plus, le film présente une résistance aux rayures supérieure à celle d'une peinture.

Le film est généralement préformé avant sa mise en place dans le moule, de manière à lui permettre d'épouser la forme de celui-ci.

Pour réaliser le surmoulage du film, on place le film et/ou la préforme dans le moule puis on injecte la matière thermoplastique.

Pour des raisons esthétiques, soit le film est découpé avec précision afin de présenter un bord régulier, soit le bord de la pièce est réalisé en contre dépouille afin de cacher le bord du film, lequel peut alors être irrégulier.

Il est relativement difficile de découper le film avec précision et la présence d'un bord en contre dépouille rend plus compliquée l'opération de démoulage.

La présente invention a pour objet de simplifier la fabrication de pièces de carrosserie ayant un film surmoulé.

L'invention y parvient grâce à un nouvel assemblage composé d'au moins deux pièces de carrosserie de véhicule automobile, dont une pièce de base comportant sur une face extérieure un film surmoulé ayant un bord, cet assemblage étant caractérisé par le fait que la pièce de base est partiellement recouverte par une ou plusieurs pièces de masquage, notamment des enjoliveurs, agencées de manière à masquer au moins une partie du bord du film de la pièce de base.

Grâce à l'invention, la fabrication de la pièce de base comportant le film surmoulé est facilitée puisqu'il n'est pas nécessaire de réaliser un bord en contre-dépouille et/ou de découper le film de manière très précise.

En particulier, la pièce de base peut comporter un bord en dépouille ou autre et le film peut présenter un bord irrégulier, cette irrégularité étant masquée par la ou les pièces de masquage venant recouvrir la pièce de base.

Dans une réalisation particulière, la ou les pièces de masquage, qui peuvent avoir une fonction propre autre que le masquage du bord du film, sont agencées pour recouvrir totalement la pièce de base dans les régions de sa face extérieure non recouvertes par le film.

Les pièces de base et de masquage peuvent être conformées et assemblées de manière à former une surface extérieure apparente sensiblement continue, ce qui peut s'avérer préférable sur le plan esthétique.

Dans une réalisation particulière, la pièce de base comporte un décrochement sur lequel se situe au moins une partie du bord du film, la profondeur de ce décrochement correspondant sensiblement à l'épaisseur de la ou des bordures de la ou des pièces de masquage venant en recouvrement de cette pièce de base.

La ou les pièces de masquage peuvent constituer des ailes et/ou des enjoliveurs périphériques ou d'autres pièces de carrosserie encore.

Dans une réalisation particulière, la pièce de base constitue au moins un bouclier et l'assemblage comporte au moins une pièce de masquage constituant un enjoliveur bordant au moins inférieurement le bouclier.

Cet enjoliveur peut s'étendre dans la région des arches de roues.

Dans une réalisation particulière, la pièce de base comporte deux parties comoulées dans des matières différentes et la jonction entre ces deux parties est au moins partiellement recouverte, de préférence totalement, par la ou les pièces de masquage.

Ainsi, la ou les pièces de masquage permettent à la fois de masquer le bord du film et la jonction entre les différentes matières de la pièce comoulée.

L'une des deux parties comoulées peut constituer un bouclier et l'autre un spoiler.

Avantageusement, les deux parties comoulées forment dans le voisinage de leur jonction un renfoncement conformé pour accueillir une ou plusieurs pièces de masquage.

Lorsque la pièce de base comporte des traces de points d'injection, ces traces sont de préférence localisées de telle sorte que la ou les pièces de masquage recouvrent celles-ci.

La pièce de base peut être réalisée dans une matière thermoplastique translucide ou transparente et le film peut être découpé de manière à délimiter au moins une région non recouverte par lui formant un vitrage pour un dispositif d'éclairage.

Lorsque la pièce de base est obtenue par comoulage de matières différentes, l'une au moins de celles-ci peut être une matière thermoplastique translucide ou transparente et le film peut être découpé de manière à ne recouvrir que partiellement cette matière afin de ménager au moins une région non recouverte constituant un vitrage pour un dispositif d'éclairage.

D'autres caractéristiques et avantages de la présente invention ressortiront à la lecture de la description détaillée qui va suivre, d'exemples de réalisation non limitatifs, et à l'examen du dessin annexé, sur lequel :
- la figure 1 représente schématiquement en perspective la partie avant d'un véhicule automobile comportant un assemblage de pièces de carrosserie conforme à un premier exemple de mise en oeuvre de l'invention,
- la figure 2 représente schématiquement, en coupe, deux pièces de l'assemblage de la figure 1,
- la figure 3 représente schématiquement, en perspective, la partie avant du véhicule automobile de la figure 1 avant montage de l'enjoliveur,
- la figure 4 illustre une variante de réalisation de l'assemblage de la figure 1, et
- la figure 5 représente schématiquement, en perspective, la partie avant d'un véhicule automobile comportant un assemblage de pièces de carrosserie conforme à un second exemple de mise en oeuvre de l'invention.

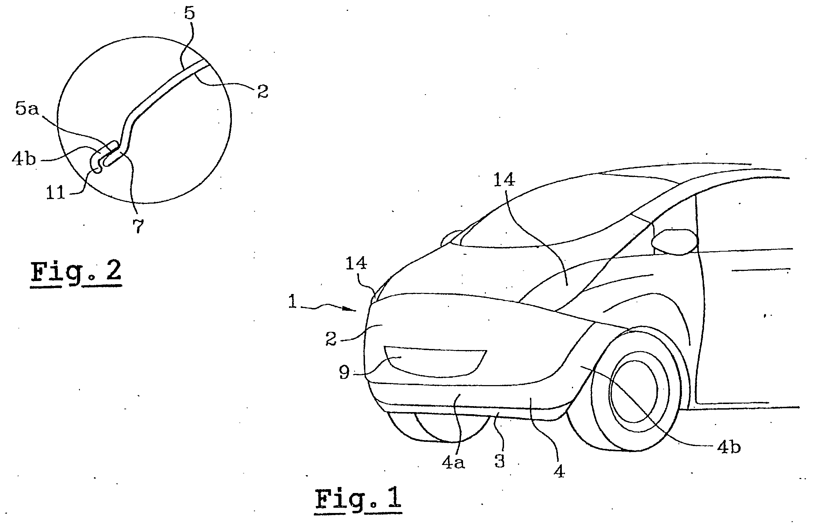

La figure 1 représente la partie avant d'un véhicule automobile comportant un assemblage 1 de pièces de carrosserie conforme à l'invention.

Cet assemblage 1 comprend un bouclier de pare-chocs 2, un spoiler 3 et un enjoliveur 4 fixé sur le bouclier 2.

Le bouclier 2 est réalisé ici par comoulage avec le spoiler 3, et l'ensemble constitue une pièce de base au sens de l'invention.

L'enjoliveur 4 constitue une pièce de masquage.

Dans l'exemple décrit, le bouclier 2 est muni d'une entrée d'air 9 et est réalisé dans une matière relativement rigide et le spoiler 3 est réalisé dans une matière plus souple.

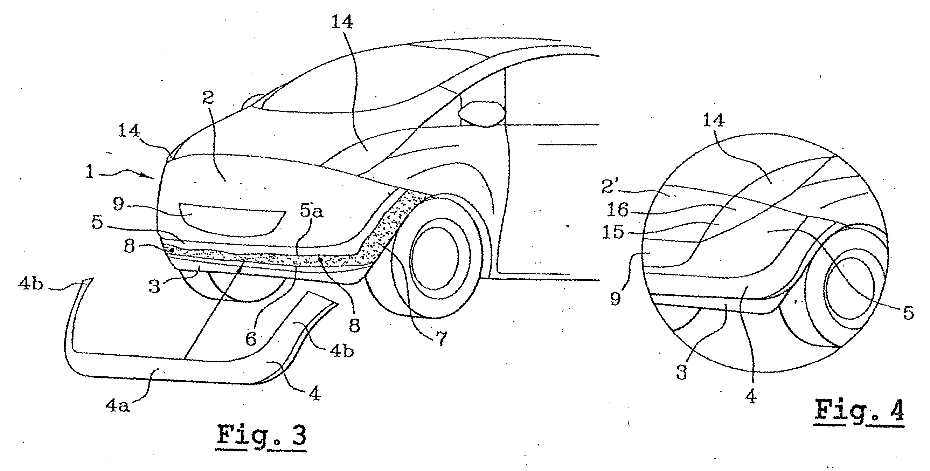

Comme on peut le voir notamment sur la figure 3, le bouclier 2 comporte un film surmoulé 5.

Lors de la fabrication de l'ensemble constitué du bouclier 2 et du spoiler 3, ce film 5 est mis en place dans un moule puis est surmoulé par la matière thermoplastique du bouclier 2.

Le film 5 subit de préférence un préformage avant d'être placé dans le moule.

Le film 5 permet de supprimer l'opération de peinture du bouclier 2 et présente une résistance élevée aux rayures.

Le spoiler 3 est dépourvu, dans l'exemple décrit, de film surmoulé.

En variante, le spoiler 3 pourrait comporter un film surmoulé, différent du film 5 recouvrant le bouclier 2.

Le bouclier 2 comporte un décrochement 7 s'étendant sur toute sa partie inférieure et sur une certaine hauteur jusqu'aux arches de roues.

Le décrochement 7 du bouclier 2 forme, avec un décrochement correspondant en partie supérieure du spoiler 3, un renfoncement 6 s'étendant sur toute la largeur du véhicule.

Le bord 5a du film 5 recouvrant le bouclier 2 se situe sur le décrochement 7.

L'enjoliveur 4 vient en recouvrement du décrochement 7 de façon à masquer notamment le bord 5a du film 5.

L'enjoliveur 4 comporte une partie inférieure 4a et deux parties latérales 4b s'engageant dans le renfoncement 6.

On a représenté en coupe sur la figure 2 l'assemblage du bouclier 2 et de l'enjoliveur 4 au niveau des arches des roues.

Chaque partie latérale 4b de l'enjoliveur 4 présente sur son bord opposé au bouclier 2 un rebord 11 dirigé vers l'arrière pour des raisons d'esthétique et de sécurité.

L'épaisseur de l'enjoliveur 4 correspond sensiblement à la profondeur du renfoncement 6, de manière à donner à la surface extérieure de l'assemblage 1 une apparence de continuité, dépourvue de décrochement.

Comme on peut le voir sur la figure 3, l'ensemble constitué du bouclier 2 et du spoiler 3 comporte des traces apparentes 8 d'injection de matière thermoplastique.

Ces traces 8 se situent dans le fond du renfoncement 6 et sont masquées par l'enjoliveur 4 lorsque celui-ci est en place.

On peut réaliser le bouclier 2 dans une matière thermoplastique transparente ou non.

Toutefois, il peut être avantageux d'utiliser pour réaliser tout ou partie du bouclier une matière thermoplastique transparente ou translucide afin de réaliser un ou plusieurs vitrages.

A titre d'exemple, on a représenté sur la figure 4 un bouclier 2' recouvrant des dispositifs d'éclairage 15, par exemple des feux de changement de direction.

Le véhicule comporte également des dispositifs d'éclairage 14 au niveau du capot 22, non recouverts par le bouclier 2', par exemple des phares.

Le bouclier 2' diffère du bouclier 2 précédemment décrit par le fait qu'il comporte une région 16 translucide non recouverte par le film 5, formant vitrage, en vis-à-vis de chaque dispositif d'éclairage 15.

Cette région 16 est obtenue par comoulage, dans une matière translucide, le reste du bouclier étant réalisé dans une matière opaque.

La matière thermoplastique translucide de chaque région 16 du bouclier 2' est légèrement recouverte par le film 5, de manière à lui donner un contour net.

En variante, le bouclier 2' peut être entièrement réalisé dans une matière thermoplastique translucide, le film 5 étant découpé de manière à ne pas couvrir la matière translucide là où des vitrages doivent être réalisés.

On peut donner à la pièce de base et aux autres pièces de l'assemblage d'autres formes encore, sans sortir du cadre de la présente invention.

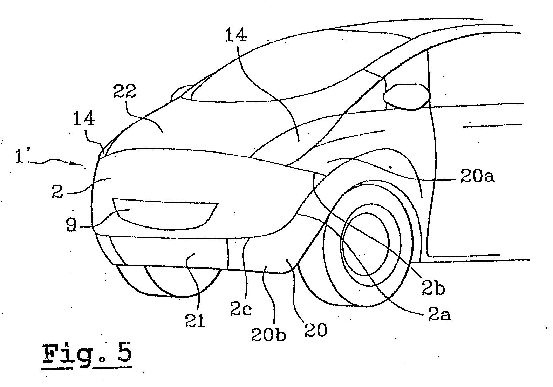

A titre d'exemple, on a représenté sur la figure 5 un assemblage 1' de pièces de carrosserie comprenant notamment le bouclier 2 précédemment décrit, ici masqué à sa périphérie par deux parties latérales 20, et un enjoliveur périphérique 21.

Les parties latérales 20 et l'enjoliveur périphérique 21 constituent des pièces de masquage au sens de l'invention.

Chaque partie latérale forme une aile 20a et borde une région latérale 2a du bouclier 2 ainsi qu'une portion de sa région supérieure 2b.

Chaque partie latérale 20 comporte également une corne 20b à l'avant, bordant une région inférieure 2c du bouclier 2 adjacente à sa région latérale 2a.

L'enjoliveur périphérique 21 borde inférieurement le bouclier 2 entre les deux parties latérales 20.

Après assemblage des pièces, la totalité des régions non recouvertes par le film 5 est masquée par les parties latérales 20, et l'enjoliveur périphérique 21, le capot 22 et les dispositifs d'éclairage 14.

Dans tous les exemples décrits, les différentes pièces de base et de masquage sont maintenues dans leur position relative définitive par des moyens de fixation conventionnels.

Bien entendu, l'invention n'est pas limitée aux exemples de réalisation qui viennent d'être décrits.

On peut par exemple réaliser un assemblage de pièces de carrosserie comprenant comme pièce de base le bouclier arrière du véhicule et comme pièces de masquage les ailes arrière notamment.

On peut encore réaliser un assemblage de pièces comprenant comme pièce de base la partie supérieure d'une portière de véhicule et comme pièce de masquage un bandeau inférieur.

## Revendications

1. Assemblage (1 ; 1') composé d'au moins deux pièces de carrosserie de véhicule automobile, dont une pièce de base (2 ; 2') comportant sur une face extérieure un film surmoulé (5) ayant un bord (5a), **caractérisé par le fait que** cette pièce de base (2 ; 2') est partiellement recouverte par une ou plusieurs pièces de masquage (4 ; 20 ; 21), notamment des enjoliveurs, agencées de manière à masquer au moins une partie du bord (5a) du film (5) de la pièce de base (2 ; 2').

2. Assemblage selon la revendication précédente, **caractérisé par le fait que** la ou les pièces de masquage (4 ; 20 ; 21) sont agencées pour recouvrir totalement la pièce de base (2 ; 2') dans les régions de sa face extérieure non recouvertes par le film (5).

3. Assemblage selon l'une des deux revendications précédentes, **caractérisé par le fait que** les pièces de base (2 ; 2') et de masquage (4 ; 20 ; 21) sont conformées et assemblées de manière à former une surface extérieure apparente sensiblement continue.

4. Assemblage selon l'une quelconque des revendications 1 à 3, **caractérisé par le fait que** la pièce de base (2 ; 2') comporte un décrochement (7) sur lequel se situe au moins une partie du bord (5a) du film (5), la profondeur de ce décrochement (7) correspondant sensiblement à l'épaisseur de la ou des bordures de la ou des pièces de masquage (4 ; 20 ; 21) venant en recouvrement de cette pièce de base (2 ; 2').

5. Assemblage selon l'une quelconque des revendications précédentes; **caractérisé par le fait que** le bord (5a) du film (5) se situe en retrait du bord de la pièce de base (2 ; 2').

6. Assemblage selon l'une quelconque des revendications précédentes, **caractérisé par le fait qu'**il comporte des pièces de masquage (20) constituant des ailes (20a).

7. Assemblage selon l'une quelconque des revendications précédentes, **caractérisé par le fait que** la pièce de base constitue au moins un bouclier (2 ; 2') et **par le fait qu'**il comporte une pièce de masquage constituant un enjoliveur (4 ; 21) bordant au moins inférieurement le bouclier.

8. Assemblage selon la revendication précédente, **caractérisé par le fait que** l'enjoliveur (4) s'étend dans la région des arches de roues.

9. Assemblage selon l'une quelconque des revendications précédentes, **caractérisé par le fait que** la pièce de base comporte deux parties (2, 3) comoulées dans des matières différentes et **par le fait que** la jonction entre ces deux parties est au moins partiellement recouverte, de préférence totalement, par la ou les pièces de masquage (4).

10. Assemblage selon la revendication précédente, **caractérisé par le fait que** l'une desdites parties constitue un bouclier (2) et l'autre un spoiler (3).

11. Assemblage selon la revendication précédente, **caractérisé par le fait que** lesdites parties (2, 3) forment dans le voisinage de leur jonction un renfoncement (6) conformé pour accueillir une ou plusieurs pièces de masquage (4).

12. Assemblage selon l'une quelconque des revendications précédentes, la pièce de base comportant des traces (8) de points d'injection de matière, **caractérisé par le fait que** la ou les pièces de masquage (4) recouvrent ces traces (8).

13. Assemblage selon l'une quelconque des revendications précédentes, **caractérisé par le fait que** la pièce de base (2') est en matière thermoplastique translucide ou transparente et **par le fait que** le film (5) est découpé de manière à délimiter au moins une région non recouverte par lui formant un vitrage (16) pour un dispositif d'éclairage (15).

14. Assemblage selon l'une quelconque des revendications 1 à 12, **caractérisé par le fait que** la pièce de base (2') est obtenue par comoulage de matières différentes, l'une au moins de celles-ci étant une matière thermoplastique translucide ou transparente et **par le fait que** le film (5) est découpé de manière à ne recouvrir que partiellement cette matière afin de ménager au moins une région non recouverte constituant un vitrage (16) pour un dispositif d'éclairage (15).

## Patentansprüche

1. Baugruppe (1; 1') bestehend aus mindestens zwei Karosserieteilen eines Kraftfahrzeugs, von denen das eine ein Basisteil (2; 2') ist, das auf einer Außenseite eine aus einem Abguss hergestellte Folie (5) mit einem Rand (5a) aufweist, **dadurch gekennzeichnet, dass** dieses Basisteil (2; 2') teilweise durch ein oder mehrere Verkleidungsteile (4; 20; 21), insbesondere durch Zierleisten, abgedeckt ist, welche derart angeordnet sind, dass sie mindestens einen Teil des Rands (5a) der Folie (5) des Basisteils (2; 2') verdecken.

2. Baugruppe nach dem vorangegangenen Anspruch, **dadurch gekennzeichnet, dass** das oder die Verkleidungsteile (4; 20; 21) derart angeordnet sind, dass sie das Basisteil (2; 2') in den von der Folie (5) nicht abgedeckten Bereichen seiner Außenseite vollständig abdecken.

3. Baugruppe nach einem der beiden vorangegangenen Ansprüche, **dadurch gekennzeichnet, dass** die Basis- (2; 2') und Verkleidungsteile (4; 20; 21) derart ausgebildet und zusammengefügt sind, dass sie eine im Wesentlichen durchgehende sichtbare äußere Oberfläche bilden.

4. Baugruppe nach einem der Ansprüche 1 bis 3, **dadurch gekennzeichnet, dass** das Basisteil (2; 2') einen Rücksprung (7) aufweist, auf dem sich mindestens ein Teil des Rands (5a) der Folie (5) befindet, wobei die Tiefe dieses Rücksprungs (7) im Wesentlichen der Stärke des bzw. der dieses Basisteil (2; 2') abdeckenden Rands bzw. Ränder des bzw. der Verkleidungsteile (4; 20; 21) entspricht.

5. Baugruppe nach einem der vorangegangenen Ansprüche, **dadurch gekennzeichnet, dass** der Rand (5a) der Folie (5) im Verhältnis zum Rand des Basisteils (2; 2') nach hinten versetzt ist.

6. Baugruppe nach einem der vorangegangenen Ansprüche, **dadurch gekennzeichnet, dass** sie Verkleidungsteile (4; 20; 21) umfasst, welche Flügel (20a) bilden.

7. Baugruppe nach einem der vorangegangenen Ansprüche, **dadurch gekennzeichnet, dass** das Basisteil mindestens einen Stoßfänger (2; 2') bildet und dass sie ein eine Zierleiste (4; 21) bildendes Verkleidungsteil umfasst, welches den Stoßfänger mindestens an seiner Unterseite umrandet.

8. Baugruppe nach dem vorangegangenen Anspruch, **dadurch gekennzeichnet, dass** die Zierleiste (4) sich bis in den Bereich der Radbögen erstreckt.

9. Baugruppe nach einem der vorangegangenen Ansprüche, **dadurch gekennzeichnet, dass** das Basisteil zwei Teile (2, 3) umfasst, welche in einem Guss aus verschiedenen Werkstoffen hergestellt wurden und dass die Verbindung zwischen den beiden Teilen zumindest teilweise, vorzugsweise ganz, durch das oder die Verkleidungsteile (4) abgedeckt ist.

10. Baugruppe nach dem vorangegangenen Anspruch, **dadurch gekennzeichnet, dass** das eine Teil einen Stoßfänger (2) und das andere einen Spoiler (3) bildet.

11. Baugruppe nach dem vorangegangenen Anspruch, **dadurch gekennzeichnet, dass** in der Nähe ihrer Verbindung die Teile (2, 3) eine Vertiefung (6) zur Aufnahme eines oder mehrerer Verkleidungsteile (4) bilden.

12. Baugruppe nach einem der vorangegangenen Ansprüche, wobei das Basisteil Spuren (8) von Spritzgusspunkten aufweist, **dadurch gekennzeichnet, dass** das oder die Verkleidungsteile (4) diese Spuren (8) abdecken.

13. Baugruppe nach einem der vorangegangenen Ansprüche, **dadurch gekennzeichnet, dass** das Basisteil (2') aus einem durchscheinenden oder durchsichtigen thermoplastischen Material hergestellt ist und dass die Folie (5) so ausgeschnitten ist, dass sie mindestens einen durch sie nicht abgedeckten Bereich begrenzt, welcher ein Glas (16) für eine Beleuchtung (15) bildet.

14. Baugruppe nach einem der Ansprüche 1 bis 12, **dadurch gekennzeichnet, dass** das Basisteil (2') aus verschiedenen Werkstoffen in einem Guss hergestellt ist, wobei mindestens ein Werkstoff ein durchscheinendes oder durchsichtiges thermoplastisches Material ist, und dass die Folie derart ausgeschnitten ist, dass sie dieses Material nur teilweise abdeckt, so dass mindestens ein nicht abgedeckter Bereich ausgespart wird, welcher ein Glas (16) für eine Beleuchtung (15) bildet.

## Claims

1. An assembly (1; 1') made up of at least two motor vehicle bodywork parts, including a base part (2; 2') having an outside face carrying an overmolded film (5) with an edge (5a), the assembly being **characterized by** the fact that said base part (2; 2') is partly covered by one or more masking pieces (4; 20; 21), in particular trim, arranged in such a manner as to mask at least a portion of the edge (5a) of the film (5) of the base part (2; 2').

2. An assembly according to the preceding claim, **characterized by** the fact that the masking piece(s) (4; 20; 21) is/are arranged to cover the base part (2; 2') totally in those regions of its outside face that are not covered by the film (5).

3. An assembly according to either one of the two preceding claims, **characterized by** the fact that the base part (2; 2'), and the masking piece (4; 20; 21) are shaped and assembled together in such a manner as to form a visible outside surface that is substantially continuous.

4. An assembly according to any one of claims 1 to 3, **characterized by** the fact that the base part (2; 2') has a step (7) in which at least a portion of the edge (5a) of the film (5) is situated, the depth of the step (7) corresponding substantially to the thickness of the margin(s) of the masking piece(s) (4; 20; 21) that overlie said base part (2; 2').

5. An assembly according to any preceding claim, **characterized by** the fact that the edge (5a) of the film (5) is set back from the edge of the base part (2; 2').

6. An assembly according to any preceding claim, **characterized by** the fact that it includes masking pieces (20) constituting fenders (20a).

7. An assembly according to any preceding claim, **characterized by** the fact that the base part constitutes at least one shield (2; 2'), and by the fact that it includes a masking piece constituting trim (4; 21) bordering at least the bottom of the shield.

8. An assembly according to the preceding claim, **characterized by** the fact that the trim (4) extends into the wheel arch region.

9. An assembly according to any preceding claim, **characterized by** the fact that the base part comprises two portions (2, 3) co-molded out of different materials, and by the fact that the junction between these two portions is covered, at least in part and preferably in full, by the masking piece(s) (4).

10. An assembly according to the preceding claim, **characterized by** the fact that one of said portions constitutes a shield (2) and the other a spoiler (3).

11. An assembly according to the preceding claim, **characterized by** the fact that said portions (2, 3) together form a setback (6) where they join, shaped so as to receive one or more masking pieces (4).

12. An assembly according to any preceding claim, the base part including traces (8) of material injection points, the assembly being **characterized by** the fact that the masking piece(s) (4) cover said traces (8).

13. An assembly according to any preceding claim, **characterized by** the fact that the base part (2') is made of translucent or transparent thermoplastic material, and by the fact that the film (5) is cut out in such a manner as to define at least one region that it does not cover so as to form a glass (16) for a lighting device (15).

14. An assembly according to any one of claims 1 to 12, **characterized by** the fact that the base part (2') is obtained by co-molding different materials, at least one of said materials being a translucent or transparent thermoplastic material, and by the fact that the film (5) is cut out in such a manner as to cover said material in part only so as to leave at least one uncovered region to constitute a glass (16) for a lighting device (15).
